(19) **Europäisches Patentamt**

**European Patent Office**

**Office européen des brevets**

(11) **EP 0 972 967 A2**

(12) **EUROPÄISCHE PATENTANMELDUNG**

(43) Veröffentlichungstag:
19.01.2000 Patentblatt 2000/03

(51) Int. Cl.⁷: **F16F 15/14**

(21) Anmeldenummer: **99112916.4**

(22) Anmeldetag: **05.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **11.07.1998 DE 19831160**

(71) Anmelder: **Carl Freudenberg**
**69469 Weinheim (DE)**

(72) Erfinder:
• **Eckel, Hans-Gerd, Dr.**
**69514 Laudenbach (DE)**
• **Böcking, Jörg**
**64297 Darmstadt (DE)**
• **Oberle, Rainer**
**69493 Hirschberg (DE)**

(54) **Drehzahladaptiver Schwingungstilgerscale**

(57)  Drehzahladaptiver Schwingungstilger für eine um eine Achse (1) rotierbare Welle, umfassend ein Nabenteil (2), an dem wenigstens eine Trägheitsmasse (3) vorgesehen ist, wobei die wenigstens eine Trägheitsmasse (3) ausgehend von einer mittleren Position, in der sich der größte Abstand ihres Schwerpunktes von der Achse (1) einstellt, relativ zum Nabenteil (2) entlang einer Bewegungsbahn (B) in Auslenkungspositionen hin- und herbewegbar ist, in der sich der Abstand des Schwerpunktes der wenigstens einen Trägheitsmasse (3) gegenüber der mittleren Position verändert, wobei die Bewegungsbahn (B) einen Krümmungsradius (R, R') hat, der sich mit zunehmender Auslenkung der Trägheitsmasse (3) aus der mittleren Position wenigstens abschnittweise ändert.

**Fig.5**

EP 0 972 967 A2

Printed by Xerox (UK) Business Services
2.16.7/3.6

**Beschreibung**

Technisches Gebiet

Die Erfindung betrifft einen drehzahladaptiven Schwingungstilger für eine um eine Achse rotierbare Welle, umfassend ein Nabenteil, an dem wenigstens eine Trägheitsmasse vorgesehen ist, wobei die wenigstens eine Trägheitsmasse ausgehend von einer mittleren Position, in der sich der größte Abstand ihres Schwerpunktes von der Achse einstellt, relativ zu dem Nabenteil entlang einer Bewegungsbahn in Auslenkungspositionen hin- und herbewegbar ist, in der sich der Abstand des Schwerpunktes der wenigsten einen Trägheitsmasse gegenüber der mittleren Position verändert.

Stand der Technik

Ein solcher drehzahladaptiver Schwingungstilger ist aus der DE 196 31 989 C1 bekannt.

An Wellen von periodisch arbeitenden Maschinen, beispielsweise an der Kurbelwelle einer Verbrennungskraftmaschine treten die Rotationsbewegung überlagernde Drehschwingungen auf, deren Frequenz sich mit der Drehzahl der Welle ändert. Zur Verringerung dieser Drehschwingungen können Schwingungstilger vorgesehen werden. Diese werden als drehzahladaptiv bezeichnet, wenn sie Drehschwingungen über einen größeren Drehzahlbereich, idealerweise über den gesamten Drehzahlbereich der Maschine tilgen können. Den Drehschwingungstilgern liegt das Prinzip zugrunde, daß die Trägheitsmassen fliehkraftbedingt bestrebt sind, die Achse bei Einleitung einer Drehbewegung in größtmöglichem Abstand zu umkreisen. Drehschwingungen, welche die Drehbewegung überlagern, führen zu einer pendelnden Relativbewegung der Trägheitsmassen. Der Schwingungstilger hat eine der Drehzahl proportionale Eigenfrequenz $f_{Tilger}$, so daß Drehschwingungen mit Frequenzen, die der Wellendrehzahl n (in Umdrehungen pro Sekunde) in gleicher Weise proportional sind, über einen großen Drehzahlbereich tilgbar sind. Es gilt demnach: $f_{Tilger} = x*n$. Dabei ist x die Ordnung der anregenden Schwingung. Diese hat z.B. bei einem Vierzylinder-Viertaktmotor den Wert x = 2. Bei dem bekannten Schwingungstilger bewegen sich die Trägheitsmassen relativ zum Nabenteil rein translatorisch auf kreisförmigen Bewegungsbahnen. Der bekannte drehzahladaptive Schwingungstilger hat jedoch den Nachteil, daß noch keine optimale Tilgungswirkung über den gesamten Drehzahlbereich und Lastbereich erzielt werden kann.

Darstellung der Erfindung

Die der Erfindung zugrundeliegende Aufgabe besteht darin, eine verbesserte Tilgungswirkung über einen weiten Drehzahlbereich und Lastbereich zu erzielen.

Diese Aufgabe wird bei einem drehzahladaptiven Schwingungstilger der eingangs genannten Art dadurch gelöst, daß die Bewegungsbahn einen Krümmungsradius hat, der sich mit zunehmender Auslenkung der Trägheitsmasse aus der mittleren Position wenigstens abschnittsweise ändert.

Durch diese erfindungsgemäße Gestaltung kann eine verbesserte Tilgungswirkung erzielt werden. Gleichzeitig kann der drehzahladaptive Schwingungstilger besser an die zu tilgenden Drehschwingungen angepaßt werden. Die erfindungsgemäße Lehre eröffnet einen bisher unbekannten großen Gestaltungsspielraum bei der Auslegung des Schwingungstilgers, wobei eine erhebliche Verbesserung der Schwingungstilgung erreicht wird.

Eine besonders gute Schwingungstilgung wird dadurch erzielt, daß der Krümmungsradius mit zunehmender Auslenkung der Trägheitsmasse aus der mittleren Position wenigstens abschnittsweise abnimmt.

Gemäß einer besonders vorteilhaften Ausgestaltung ist vorgesehen, daß der Krümmungsradius stetig abnimmt. Die Bewegungsbahn erhält dadurch eine Krümmung, die durch eine streng monoton ansteigend verlaufende Funktion darstellbar ist.

Eine besonders gute Schwingungstilgung wird auch dadurch erzielt, daß mehrere in Umfangsrichtung benachbarte Trägheitsmassen vorgesehen sind.

Auf kleinem Bauraum können dann besonders große Trägheitsmassen vorgesehen werden, wenn die in Umfangsrichtung benachbarten Trägheitsmassen an den einander zugewandten Enden abgerundet ausgebildet sind und einander auslenkungsunabhängig lose anliegend berühren.

Eine weitere Verbesserung wird dadurch erzielt, daß der Krümmungsradius der Bewegungsbahn in der mittleren Position durch die Formel

$$R >= k\frac{L}{x^2}$$

bestimmt ist, wobei L der Abstand des Krümmungsmittelpunkts von der Achse, x die Ordnung der anregenden Schwingung und k ein Faktor in dem Bereich von 0,8 bis 1,2 ist. Dabei stellt der Krümmungsmittelpunkt den Drehpunkt der Trägheitsmasse dar. Die Ordnung x der anregenden Schwingung gibt das Verhältnis an zwischen der Schwingungsfrequenz und der Drehzahl (in Umdrehungen pro Sekunde). Bei einem Vierzylinder-Viertaktmotor ist beispielsweise x = 2 für die dominant anregende Zündordnung. Durch die Variation von k in dem angegebenen Bereich kann unter den verschiedensten Bedingungen eine optimierte Schwingungstilgung erreicht werden.

Vorteilhafterweise liegt k in dem Bereich von 0,8 bis 0,999 oder 1,001 bis 1,2.

Eine weiter verbesserte Schwingungstilgung kann dadurch erzielt werden, daß die Bewegungsbahn die Form eines Zykloidenabschnitts hat. Eine Zykloide ist eine Kurve, die entsteht, wenn ein Kreis auf einer Geraden abrollt. Ein mit dem Kreis in einem Abstand von seinem Mittelpunkt fest verbundener Punkt beschreibt beim Abrollen des Kreises auf der Geraden eine aus kongruenten Stücken zusammengesetzte Kurve.

Die Abstimmbarkeit des Schwingungstilgers wird dadurch weiter verbessert, daß die Bewegungsbahn in einem Feld liegt, das einerseits durch einen Kreis, dessen Krümmungsradius durch die Formel

$$R = k\frac{L}{x^2}$$

mit k = 1,2 bestimmt ist, und andererseits durch eine Zykloide, deren Krümmungsradius in der mittleren Position durch die Formel

$$R = k\frac{L}{x^2}$$

mit k = 0,8 bestimmt ist, begrenzt ist. Dabei sind Kreis und Zykloide so angeordnet, daß deren Bahnen in der mittleren Position zusammenfallen. Durch diese Gestaltung der Bewegungsbahnen der sich in einem Fliehkraftfeld befindenden Trägheitsmassen kann eine gute Schwingungstilgung erzielt werden. Auf diese Weise ist es möglich, eine auslenkungsunabhängige Pendeldauer der relativ zu dem Nabenteil beweglichen Trägheitsmassen zu erzielen. So können neben den Nichtlinearitäten der pendelnden Trägheitsmassen beispielsweise auch von einem Schmiermittel herrührende, hydrostatische und hydrodynamische Effekte weitgehend kompensiert werden.

Weiterhin kann vorgesehen werden, daß die Bewegungsbahn in einem ersten, der mittleren Position benachbarten Abschnitt in einem ersten Bereich des Feldes liegt, wobei der erste Bereich einerseits durch einen Kreis, dessen Krümmungsradius durch die Formel

$$R = k\frac{L}{x^2}$$

bei k = 1,0 bestimmt ist, und andererseits durch den Kreis, dessen Krümmungsradius durch die Formel

$$R = k\frac{L}{x^2}$$

bei k =1,2 bestimmt ist, begrenzt ist. Dabei sind die Kreise so angeordnet, daß deren Bahnen in der mittleren Position zusammenfallen.

Gemäß einer Weiterbildung dieses Erfindungsgedankens ist vorgesehen, daß die Bewegungsbahn in einem zweiten Abschnitt, der dem ersten Abschnitt benachbart ist, in einem zweiten Bereich des Feldes liegen, wobei der zweite Bereich einerseits durch den Kreis, dessen Krümmungsradius durch die Formel

$$R = k\frac{L}{x^2}$$

bei k = 1,0 bestimmt ist, und andererseits durch die Zykloide, deren Krümmungsradius in der mittleren Position durch die Formel

$$R = k\frac{L}{x^2}$$

0,8 bestimmt ist, begrenzt ist. Dabei sind Kreis und Zykloide so angeordnet, daß deren Bahnen in der mittleren Position zusammenfallen. Durch die bereichsweise unterschiedliche Gestaltung der Bewegungsbahn werden neue Möglichkeiten eröffnet, die Tilgung unter den verschiedensten Bedingungen weiter zu optimieren.

Gemäß einer vorteilhaften Ausgestaltung der Erfindung ist vorgesehen, daß die wenigstens eine Trägheitsmasse durch um eine Bolzenachse drehbare achsparallele Bolzen in dem Nabenteil gelagert ist, die ersten Wälzbahnen des Nabenteils und zweiten Wälzbahnen der Trägheitsmasse zugeordnet sind.

Als mögliche Weiterbildung dieses Erfindungsgedankens ist für eine identische Gestaltung der Wälzbahnen von Trägheitsmasse und Nabenteil vorgesehen, daß ein der Trägheitsmasse zugeordneter Punkt existiert, der sich mit der Trägheitsmasse entlang der Bewegungsbahn verschiebt und dessen Abstand, in der mittleren Position der Trägheitsmasse, von dem der mittleren Position zugeordneten Krümmungsmittelpunkt der Bewegungsbahn des Punktes doppelt so groß ist, wie der Abstand des Punktes von der Bolzenachse, und daß die ersten und zweiten Wälzbahnen so ausgebildet sind, daß in jeder Auslenkungsposition die Bolzenachse auf der geometrischen Mitte einer gedachten Verbindungslinie zwischen dem der mittleren Position zugeordneten Krümmungsmittelpunkt und jedem Punkt der Bewegungsbahn des Punktes liegt. Hierdurch wird angegeben, wie die Wälzbahnen, auf denen die Bolzen abrollen, auszubilden sind, damit eine gute Schwingungstilgung erreicht werden kann.

Kurzbeschreibung der Zeichnungen

Der Gegenstand der Erfindung wird nachfolgend anhand der Zeichnungen weiter verdeutlicht. Es zeigen:

Fig. 1: Eine Ansicht eines drehzahladaptiven Schwingungstilgers von vorn.

Fig. 2: Einen Querschnitt durch einen drehzahladaptiven Schwingungstilger.

Fig. 3: Eine schematische Darstellung der Bewegungsbahnen.

Fig. 4: Eine erfindungsgemäße Trägheitsmasse.

Fig. 5: Einen vergrößerten Ausschnitt der Trägheitsmasse aus Fig. 4.

Ausführung der Erfindung

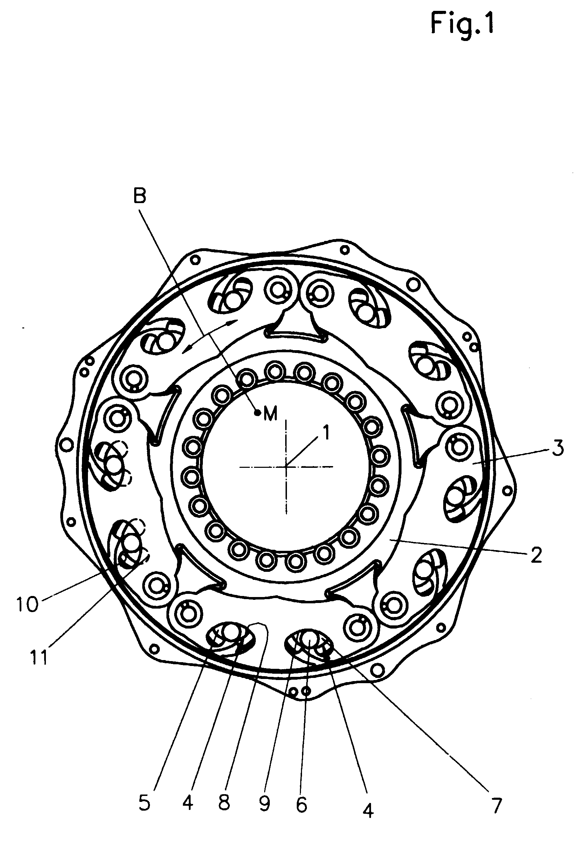

Fig. 1 zeigt einen drehzahladaptiven Schwingungstilger für eine um eine Achse 1 rotierbare Welle (nicht dargestellt), der ein Nabenteil 2 und eine Anzahl in Umfangsrichtung benachbarter Trägheitsmassen 3 aufweist. Das Nabenteil 2 weist für jede Trägheitsmasse 3 jeweils zwei in Umfangsrichtung benachbarte Halterungen 4 auf, um die Trägheitsmassen 3 auf dem Nabenteil 2 zu lagern.

Jede Halterung 4 wird durch eine Ausnehmung 5 in dem Nabenteil 2 und einen darin aufgenommenen Bolzen 6 gebildet. Dabei erstreckt sich der Bolzen 6, dessen Längsachse parallel zur Achse 1 des Nabenteils 2 verläuft, in eine insbesondere als Durchbruch ausgebildete Ausnehmung 7 in der Trägheitsmasse 3.

Das Nabenteil 2 weist eine die Ausnehmung 5 begrenzende Wälzbahn 8 auf, und die Trägheitsmasse 3 weist eine die Ausnehmung 5 begrenzende Wälzbahn 9 auf. Die Wälzbahnen 8, 9 und der Bolzen 6 sind derart ausgebildet und angeordnet, daß die Trägheitsmasse 3 ausgehend von einer mittleren Position, in der sich der größte Abstand ihres Schwerpunktes von der Achse 1 einstellt, relativ zum Nabenteil 2 entlang einer Bewegungsbahn B in Auslenkungspositionen hin- und herbewegbar ist. Bei einer solchen im Fliehkraftfeld stattfindenden Pendelbewegung der Trägheitsmassen 3 nähert sich der Schwerpunkt der Trägheitsmassen 3 in den Auslenkungspositionen der Achse 1 an. Bei einer Bewegung der Trägheitsmassen 3 zwischen den Auslenkungspositionen wälzen die Bolzen 6 auf den Wälzbahnen 8, 9 ab, welche gegensinnig gekrümmt sind. Die Wälzbahn 8 im Nabenteil weist dabei in Richtung der Achse 1, während die Wälzbahn 9 in der Trägheitsmasse 3 nach außen, von der Achse 1 wegweist.

Bei Auftreten einer eine Rotationsbewegung überlagernden Drehschwingung werden die Trägheitsmassen 3 aus ihrer in Fig. 1 dargestellten Mittelposition relativ zu dem Nabenteil 2 entlang der gekrümmten Bewegungsbahn B bewegt. Jede Trägheitsmasse 3 führt dabei eine translatorische Bewegung relativ zu dem Nabenteil 2 aus, so daß jeder Punkt der starren Trägheitsmasse 3, insbesondere deren Schwerpunkt, eine Verschiebung entlang einer identischen Bewegungsbahn B ausführt.

Die Trägheitsmassen 3 weisen darüber hinaus in den Ausnehmungen 7 den Wälzbahnen 9 gegenüberliegende Führungsbahnen 10 auf, so daß die Ausnehmungen 7 die Form eines U erhalten, welches von der Achse 1 weggerichtet ist. Entsprechende Führungsbahnen 11 sind auch in der Halterung 4 des Nabenteils 2 ausgebildet (vgl. gestrichelte Darstellung in Fig. 1).

Die in Umfangsrichtung benachbarten Trägheitsmassen sind an den einander zugewandten Enden abgerundet ausgebildet und berühren einander lose unabhängig von der Auslenkung.

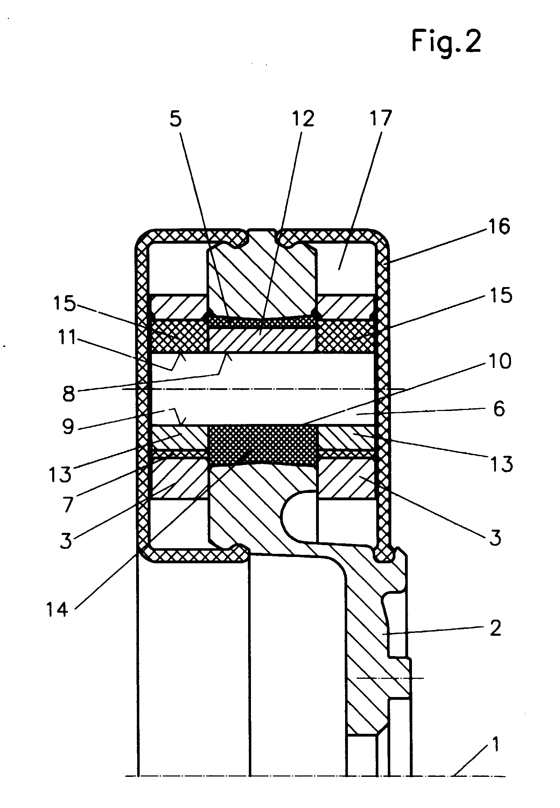

Der in Fig. 2 dargestellte Querschnitt entlang der Achse 1 verdeutlicht die Anordnung und Lagerung der Trägheitsmassen 3 an dem Nabenteil 2. Bei der in Fig. 2 dargestellten Ausführungsform sind die Trägheitsmassen 3 paarweise axial beidseitig dem Nabenteil 2 benachbart angeordnet.

Die Wälzbahnen 8, 9 sind Bestandteile von Einsatzteilen 12, 13, die in Ausnehmungen 5 bzw. 7 des Nabenteils 2 bzw. der Trägheitsmasse 3 unverlierbar aufgenommen sind. Die Einsatzstücke 12, 13 können auch zunächst lose in die Ausnehmungen 5 bzw. 7 eingefügt und durch nachträgliches Einformen der die Führungsbahnen 10, 11 tragenden Schicht 14, 15 mit den Ausnehmungen 5 bzw. 7 und den Einsatzteilen 12 bzw. 13 verklebt sein.

Der die Halterungen 4 aufweisende Abschnitt des Nabenteils 2 wird durch gegenüber dem Nabenteil 2 abgedichtete Kappen 16 umschlossen, so daß eine Kammer 17 entsteht. Diese wird zu einem geringen Teil mit einem Schmiermittel angefüllt. Als Schmiermittel kommen insbesondere Schmierflüssigkeiten, z.B. Schmieröle oder Schmierfette in Betracht.

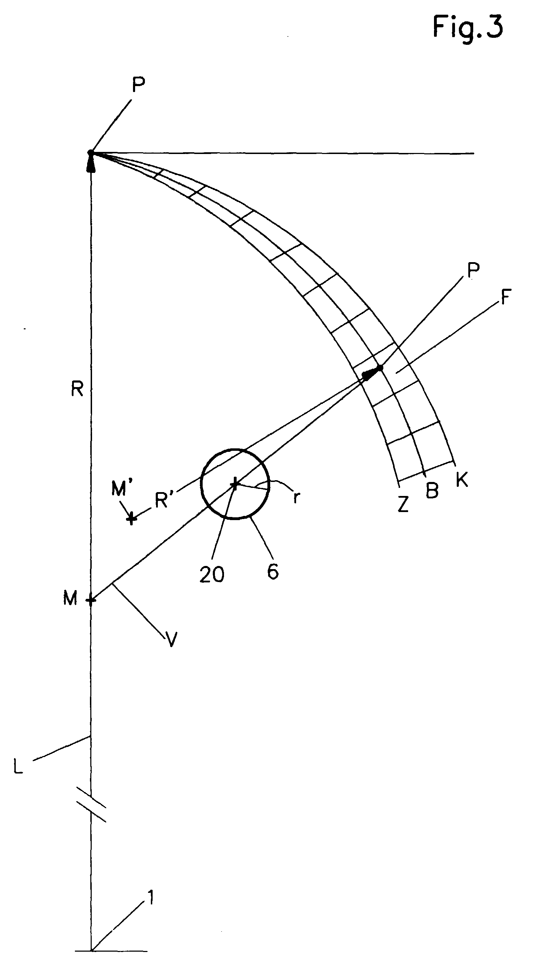

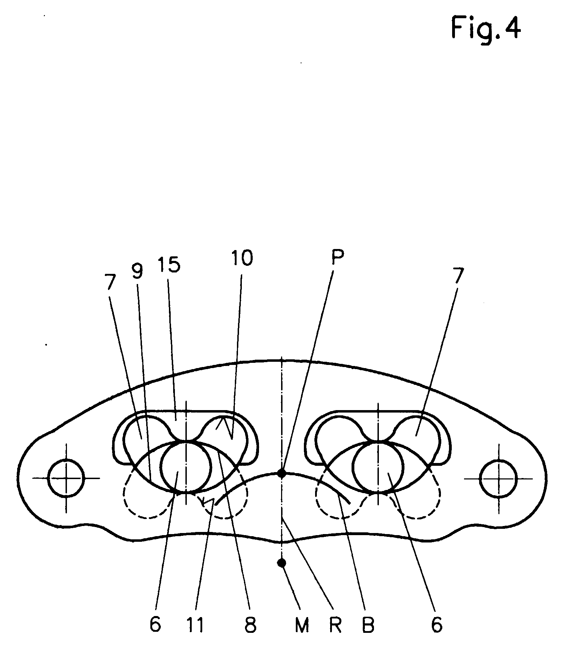

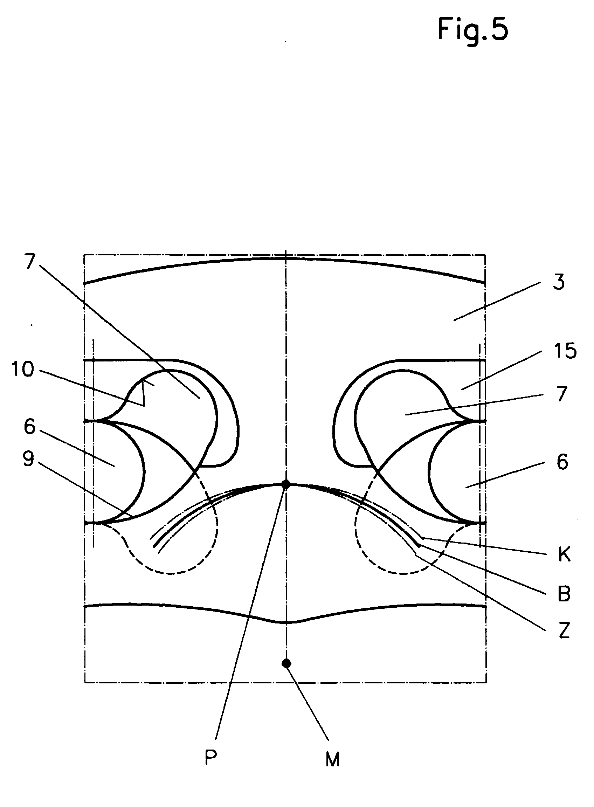

Fig. 3, 4 und 5 verdeutlichen schematisch näher die erfindungsgemäße Gestaltung der Bewegungsbahn B. Die Bewegungsbahn B eines Punktes P der Trägheitsmasse 3 weist einen Krümmungsradius R in der mittleren Position der Trägheitsmasse 3 auf. Der Krümmungsradius R der Bewegungsbahn B in der mittleren Position ist durch die Formel

$$R = k\frac{L}{x^2}$$

bestimmt, wobei L der Abstand des Krümmungsmittelpunkts M von der Achse 1, x die Ordnung der anregenden Schwingung und k ein Faktor in dem Bereich von 0,8 bis 1,2 ist. Dabei ist k vorteilhafterweise von 1 verschieden.

Der Krümmungsradius ändert sich mit zunehmender Auslenkung der Trägheitsmasse 3 aus der mittleren Position in die Auslenkungsposition und nimmt dabei ab (Krümmungsradius R'). Infolgedessen nimmt die Krümmung der Bewegungsbahn B zu. Die Zunahme der Krümmung erfolgt stetig und kann durch eine monotone Funktion beschrieben werden. Dabei kann die Bewegungsbahn B die Form eines Zykloidenabschnitts Z haben. Eine Zykloide ist eine Kurve, die entsteht, wenn ein Kreis auf einer Geraden abrollt. Ein mit dem Kreis in einem Abstand von seinem Mittelpunkt fest verbundener Punkt beschreibt beim Abrollen des Kreises auf der Geraden eine aus kongruenten Stücken zusammengesetzte Kurve. Durch die erfindungsgemäße Ausgestaltung der Bewegungsbahnen der Trägheitsmassen wird eine besonders gute Abstimmbarkeit des Schwingungstilgers erreicht.

Weiterhin liegt die Bewegungsbahn B im Bereich eines Feldes F, das einerseits durch einen Kreis K, dessen Krümmungsradius R durch die Formel

$$R = k\frac{L}{x^2}$$

mit k = 1,2 bestimmt ist, und andererseits durch eine Zykloide Z, deren Krümmungsradius R in der mittleren Position durch die Formel

$$R = k\frac{L}{x^2}$$

mit k = 0,8 bestimmt ist, begrenzt ist. Dabei sind Kreis und Zykloide so angeordnet, daß deren Bahnen in der mittleren Position zusammenfallen und die Anfangskrümmung der Zykloide Z der Krümmung einer Kreisbahn K mit k = 0,8 entspricht.

Eine weitere verbesserte Tilgungswirkung wird dadurch erzielt, daß die Bewegungsbahn B in einem ersten, der mittleren Position benachbarten Abschnitt in einem ersten Bereich des Feldes F liegt, wobei der erste Bereich einerseits durch einen Kreis, dessen Krümmungsradius durch die Formel

$$R = k\frac{L}{x^2}$$

bei k = 1,0 bestimmt ist, und andererseits durch den Kreis K, dessen Krümmungsradius durch die Formel

$$R = k\frac{L}{x^2}$$

bei k = 1,2 bestimmt ist, begrenzt ist. Dabei sind die Kreise so angeordnet, daß deren Bahnen in der mittleren Position zusammenfallen. In einem zweiten Abschnitt, der sich an den ersten Abschnitt anschließt verläuft die Bewegungsbahn B dann in einem zweiten Bereich des Feldes F, wobei der zweite Bereich einerseits durch den Kreis, dessen Krümmungsradius durch

die Formel

$$R = k\frac{L}{x^2}$$

bei k = 1,0 bestimmt ist, und andererseits durch die Zykloide Z, deren Krümmungsradius R in der mittleren Position durch die Formel

$$R = k\frac{L}{x^2}$$

mit k = 0,8 bestimmt ist, begrenzt ist. Kreis und Zykloide Z sind dabei so angeordnet, daß deren Bahnen in der mittleren Position zusammenfallen (in Figur 3 ist der das Feld F in zwei Bereiche teilende Kreis nicht dargestellt). Durch die abschnittweise unterschiedliche Gestaltung der Bewegungsbahn werden neue Möglichkeiten eröffnet, die Tilgung unter den verschiedensten Bedingungen weiter zu optimieren.

Die Trägheitsmasse 3 führt eine rein translatorische Bewegung relativ zu dem Nabenteil 2 aus. Dies wird durch eine auch als parallele bifilare Aufhängung bezeichnete Lagerung jeder Trägheitsmasse 3 in zwei achsparallelen Bolzen 6 erreicht. Da die Trägheitsmasse 3 zudem ein starrer Körper ist, führt jeder der Trägheitsmasse 3 zugeordnete Punkt P eine identische Bewegung entlang der durch den jeweiligen Punkt P laufenden Bewegungsbahn B aus.

Die Wälzbahnen 8,9 des Nabenteils und der Trägheitsmasse 3 sind wie folgt gestaltet: Ausgehend von einem der Trägheitsmasse 3 zugeordnetem Punkt P, der sich mit der Trägheitsmasse 3 entlang der Bewegungsbahn B verschiebt und dessen Abstand, in der mittleren Position der Trägheitsmasse 3, von dem der mittleren Position zugeordneten Krümmungsmittelpunkt M der Bewegungsbahn des Punkte P doppelt so groß ist, wie der Abstand des Punktes P von der Bolzenachse 20 des Bolzens 6, sind die ersten und zweiten Wälzbahnen 8,9 so ausgebildet, daß in jeder Auslenkungsposition die Bolzenachse 20 auf der geometrischen Mitte einer gedachten Verbindungslinie V zwischen dem der mittleren Position zugeordneten Krümmungsmittelpunkt M und jedem Punkt der Bewegungsbahn B des Punktes P liegt. Aus dieser Lage der Bolzenachse 20 kann die räumliche Gestaltung der ersten und zweiten Wälzbahn 8,9 abgeleitet werden, die jeweils von der Bolzenachse 20 durch den Bolzenradius r beabstandet sind.

**Patentansprüche**

1. Drehzahladaptiver Schwingungstilger für eine um eine Achse (1) rotierbare Welle, umfassend ein Nabenteil (2), an dem wenigstens eine Trägheitsmasse (3) vorgesehen ist, wobei die wenigstens eine Trägheitsmasse (3) ausgehend von einer mittleren Position, in der sich der größte Abstand ihres Schwerpunktes von der Achse (1) einstellt, relativ zum Nabenteil (2) entlang einer Bewegungsbahn (B) in Auslenkungspositionen hin- und herbewegbar ist, in der sich der Abstand des Schwerpunktes der wenigstens einen Trägheitsmasse (3) gegenüber der mittleren Position verändert, **dadurch gekennzeichnet**, daß die Bewegungsbahn (B) einen Krümmungsradius (R, R') hat, der sich mit zunehmender Auslenkung der Trägheitsmasse (3) aus der mittleren Position wenigstens abschnittsweise ändert.

2. Drehzahladaptiven Schwingungstilger nach Anspruch 1, dadurch gekennzeichnet, daß der Krümmungsradius (R, R') mit zunehmender Auslenkung der Trägheitsmasse (3) aus der mittleren Position wenigstens abschnittsweise abnimmt.

3. Drehzahladaptiver Schwingungstilger nach Anspruch 2, dadurch gekennzeichnet, daß der Krümmungsradius (R, R') stetig abnimmt.

4. Drehzahladaptiver Schwingungstilger nach einem der Ansprüche 1 bis 3, dadurch gekennzeichnet, daß mehrere in Umfangsrichtung benachbarte Trägheitsmassen (3) vorgesehen sind.

5. Drehzahladaptiver Schwingungstilger nach Anspruch 4, dadurch gekennzeichnet, daß die in Umfangsrichtung benachbarten Trägheitsmassen (3) an den einander zugewandten Enden abgerundet ausgebildet sind und einander auslenkungsunabhängig lose anliegend berühren.

6. Drehzahladaptiver Schwingungstilger nach einem der Ansprüche 1 bis 5, dadurch gekennzeichnet, daß der Krümmungsradius (R) der Bewegungsbahn (B) in der mittleren Position durch die Formel

$$R = k\frac{L}{x^2}$$

bestimmt ist, wobei L der Abstand des Krümmungsmittelpunkts (M) von der Achse (1), x die Ordnung der anregenden Schwingung und k ein Faktor in dem Bereich von 0,8 bis 1,2 ist.

7. Drehzahladaptiver Schwingungstilger nach Anspruch 6, dadurch gekennzeichnet, daß k in dem Bereich von 0,8 bis 0,999 oder 1,001 bis 1,2 liegt.

8. Drehzahladaptiver Schwingungstilger nach Anspruch 6 oder 7, dadurch gekennzeichnet, daß die Bewegungsbahn (B) die Form eines Zykloidenabschnitts (Z) hat.

9. Drehzahladaptiver Schwingungstilger nach einem der Ansprüche 6 bis 8, dadurch gekennzeichnet, daß die Bewegungsbahn (B) in einem Feld (F) liegt, das einerseits durch einen Kreis (K), dessen Krümmungsradius (R) durch die Formel

$$R = k\frac{L}{x^2}$$

mit k = 1,2 bestimmt ist, und andererseits durch eine Zykloide (Z), deren Krümmungsradius (R) in der mittleren Position durch die Formel

$$R = k\frac{L}{x^2}$$

mit k = 0,8 bestimmt ist, begrenzt ist.

10. Drehzahladaptiver Schwingungstilger nach Anspruch 9, dadurch gekennzeichnet, daß die Bewegungsbahn (B) in einem ersten, der mittleren Position benachbarten Abschnitt in einem ersten Bereich des Feldes (F) liegt, wobei der erste Bereich einerseits durch einen Kreis, dessen Krümmungsradius (R) durch die Formel

$$R = k\frac{L}{x^2}$$

bei k = 1,0 bestimmt ist, und andererseits durch den Kreis (K), dessen Krümmungsradius (R) durch die Formel

$$R = k\frac{L}{x^2}$$

bei k = 1,2 bestimmt ist, begrenzt ist

11. Drehzahladaptiver Schwingungstilger nach Anspruch 10, dadurch gekennzeichnet, daß die Bewegungsbahn (B) in einem zweiten Abschnitt, der dem ersten Abschnitt benachbart ist, in einem zweiten Bereich des Feldes (F) liegt, wobei der zweite Bereich einerseits durch den Kreis, dessen Krümmungsradius (R) durch die Formel

$$R = k\frac{L}{x^2}$$

bei k = 1,0 bestimmt ist, und andererseits durch die Zykloide (Z), deren Krümmungsradius (R) in der mittleren Position durch die Formel

$$R = k\frac{L}{x^2}$$

mit k =0,8 bestimmt ist, begrenzt ist

12. Drehzahladaptiver Schwingungstilger nach einem der Ansprüche 1 bis 11, dadurch gekennzeichnet, daß die wenigstens eine Trägheitsmasse (3) durch um eine Bolzenachse (20) drehbare achsparallele Bolzen (6) in dem Nabenteil (2) gelagert ist, die ersten Wälzbahnen (8) des Nabenteils und zweiten Wälzbahnen (9) der Trägheitsmasse (3) zugeordnet sind.

13. Drehzahladaptiver Schwingungstilger nach Anspruch 12, dadurch gekennzeichnet, daß ein der Trägheitsmasse (3) zugeordneter Punkt (P) existiert, der sich mit der Trägheitsmasse (3) entlang der Bewegungsbahn (B) verschiebt und dessen Abstand, in der mittleren Position der Trägheitsmasse (3), von dem der mittleren Position zugeordneten Krümmungsmittelpunkt (M) der Bewegungsbahn des Punktes (P) doppelt so groß ist, wie der Abstand des Punktes (P) von der Bolzenachse (20) und daß die ersten und zweiten Wälzbahnen (8, 9) so ausgebildet sind, daß in jeder Auslenkungsposition die Bolzenachse (20) auf der geometrischen Mitte einer gedachten Verbindungslinie zwischen dem der mittleren Position zugeordneten Krümmungsmittelpunkt (M) und jedem Punkt der Bewegungsbahn (B) des Punktes (P) liegt.

# Fig.1

## Fig.2

Fig.3

Fig.4

# Fig.5